# EUROPÄISCHE PATENTANMELDUNG

(11) **EP 4 129 851 A1**
(43) Veröffentlichungstag der Anmeldung: **08.02.2023**
(21) Anmeldenummer: 22169143.9
(22) Anmeldetag: 21.04.2022
(51) Int. Cl.: B65D 51/16, B65D 53/02

(54) **ELASTISCHES DICHTELEMENT**

(30) Priorität: 02.08.2021 DE 102021119972
(71) Anmelder: alfi GmbH Isoliergefässe, Metall- und Haushaltswaren, 97877 Wertheim (DE)
(72) Erfinder: Thoma, Siegfried, 97877 Wertheim (DE)
(74) Vertreter: Grünecker Patent- und Rechtsanwälte PartG mbB

(57) **Zusammenfassung**

Die vorliegende Erfindung betrifft ein elastisches Dichtelement (1) zum flüssigkeitsdichten Abdichten eines Gefäßstopfens (2) gegenüber einem Gefäßinnenraum (3), das Dichtelement (1) aufweisend eine Gefäßinnenraumgrenzfläche (6) befindlich an einer beim Abdichten dem Gefäßinnenraum (3) zugewandten Seite des Dichtelements (1), wobei die Gefäßinnenraumgrenzfläche (6) beim Abdichten mit den Gefäßinnenraum (3) in Fluidverbindung steht, eine erste Dichtfläche (5) zur Anlage am Gefäßstopfen (2), die erste Dichtfläche (5) befindlich an einer dem Gefäßinnenraum (3) abgewandten Seite des Dichtelements (1), eine zweite Dichtfläche (7) zur Anlage an einer Wandung des Gefäßinnenraums (3), dadurch gekennzeichnet, dass das Dichtelement (1) einen Belüftungskanal (13) aufweist, welcher sich von der Gefäßinnenraumgrenzfläche (6) durch das Dichtelement (1) hin zur ersten Dichtfläche (5) erstreckt. Die Erfindung betrifft weiterhin einen zugehörigen Gefäßstopfen (2) sowie einen zugehörigen Behälter (20).

## Beschreibung

Die vorliegende Erfindung betrifft ein elastisches Dichtelement zum Abdichten eines Gefäßstopfens gegenüber einem Gefäßinnenraum nach dem Oberbegriff des unabhängigen Anspruchs. Die Erfindung betrifft weiterhin einen zugehörigen Gefäßstopfen sowie einen zugehörigen Behälter.

Aus der EP 0328731 A1 ist ein Dichtlösung für Isoliergefäße bekannt, wobei die Dichtungsfläche des Schraubstopfens wenigstens eine, durch eine Unebenheit gebildete Stelle verminderten Anlagedruckes aufweist, um einen Druckausgleich zwischen Gefäßinnenraum und Gefäßaußenraum zu ermöglich und eine unerwünschte Unterdruckbildung im Gefäßinnenraum und somit eine unterdruckbedingte erhöhte Öffnungskraft zu vermeiden.

Es hat sich jedoch gezeigt, dass derartige Systeme dazu neigen, flüssigkeitsundicht zu sein und weiterhin eine vergleichsweise aufwändige Formgebung am Stopfen erfordern.

Der vorliegenden Erfindung liegt die Aufgabe zugrunde, eine Lösung bereitzustellen, welche es ermöglicht, die benötigte Öffnungskraft am Gefäßstopfen bei Unterdrucksituationen zu reduzieren und gleichzeitig ein flüssigkeitsdichtes Abdichten des Gefäßstopfens gegenüber dem Gefäßinnenraum sicherzustellen. Zudem soll die Lösung möglichst einfach zu fertigen sein.

Die vorliegende Erfindung schlägt vor, die genannte Aufgabe mit einem elastischen Dichtelement gemäß dem unabhängigen Anspruch 1 zu lösen.

Genauer wird ein elastisches Dichtelement zum flüssigkeitsdichten Abdichten eines Gefäßstopfens gegenüber einem Gefäßinnenraum vorgeschlagen, das Dichtelement aufweisend eine Gefäßinnenraumgrenzfläche befindlich an einer beim Abdichten dem Gefäßinnenraum zugewandten Seite des Dichtelements, wobei die Gefäßinnenraumgrenzfläche beim Abdichten mit dem Gefäßinnenraum in Fluidverbindung steht, eine erste Dichtfläche zur Anlage am Gefäßstopfen, die erste Dichtfläche befindlich an einer dem Gefäßinnenraum abgewandten Seite des Dichtelements, eine zweite Dichtfläche zur Anlage an einer Wandung des Gefäßinnenraums, dadurch gekennzeichnet, dass das Dichtelement einen Belüftungskanal aufweist, welcher sich von der Gefäßinnenraumgrenzfläche durch das Dichtelement hin zur ersten Dichtfläche erstreckt.

Durch das Vorsehen eines Belüftungskanals, welcher sich von der Gefäßinnenraumgrenzfläche durch das Dichtelement hin zur ersten Dichtfläche erstreckt, ist es ermöglicht, dass ein Druckausgleich durch das Dichtelement hindurch stattfinden kann, wobei aber die erste Dichtfläche und somit auch der Belüftungskanal durch die Anlage der ersten Dichtfläche am Gefäßstopfen beim Abdichten flüssigkeitsdicht verschlossen ist.

Weiterhin ermöglicht diese erfindungsgemäße Anordnung, dass beispielsweise durch eine unterdruckbedingte elastische und temporäre Verformung des Dichtelements in Richtung der Gefäßinnenraumgrenzfläche, ein Druckausgleich über die erste Dichtfläche und den Belüftungskanal stattfinden kann. Dies findet beispielsweise dann statt, wenn der Gefäßstopfen während einer Unterdrucksituation vom Gefäßinnenraum wegbewegt wird.

Weiterhin erlaubt diese erfindungsgemäße Anordnung, die Gasaustausch- bzw. Belüftungseigenschaften des Dichtelements beispielsweise über eine zusätzliche Oberflächenstruktur der ersten Dichtfläche, beispielsweise durch das Vorsehen einer gasdurchlässigen Mikrostrukturoberfläche, welche jedoch keine Flüssigkeit passieren lässt, weiter zu verbessern.

Hierdurch wird die für den Stopfen benötigte Öffnungskraft bei einer Unterdrucksituation reduziert und dennoch ein flüssigkeitsdichtes Abdichten ermöglicht. Zudem lässt sich das erfindungsgemäße Dichtelement an vielen bestehenden Gefäßstopfen ohne die Notwendigkeit für konstruktive Abänderungen am Stopfen nachrüsten und ist vergleichsweise einfach zu fertigen.

In einer möglichen Ausführungsform der Erfindung kann die zweite Dichtfläche ein Querschnittsprofil mit mehreren Vorsprüngen, insbesondere ein Querschnittsprofil mit mehreren Dichtrippen, aufweisen.

Durch das Querschnittsprofil mit mehreren Vorsprüngen wird der Anlagedruck an der zweiten Dichtfläche lokal erhöht, so dass ein flüssigkeitsdichtes Abdichten an dieser Dichtfläche früher stattfindet. Dadurch neigt der Benutzer auch weniger dazu, das Dichtelement beim Verschließen zu fest zu drehen oder zu "überquetschen". Hierdurch wird bei einer Öffnungsbewegung des Stopfens weniger Kraft benötigt. Ein Reduzieren des unnötigen Überdrehens oder Überquetschens des Dichtelements vereinfacht es dem Dichtelement zudem, sich bei einer Unterdrucksituation in eine Belüftungsstellung verformen zu können.

In einer weiteren erfindungsgemäßen Weiterbildung kann das Dichtelement ringförmig ausgebildet sein und die zweite Dichtfläche radial außerhalb zum Belüftungskanal positioniert sein.

Diese Anordnung erlaubt es in einfacher Weise, dass eine unterdruckbedingte Verformung des Dichtelements einen Belüftungsweg über die erste Dichtfläche freigibt, da die zweite Dichtfläche, als Hauptdichtfläche, bei Unterdruck zur größten elastischen Verformung in Richtung der Gefäßinnenraumgrenzfläche neigt.

In einer weiteren möglichen Ausführungsform kann sich der Belüftungskanal auf kürzestem Wege zwischen Gefäßinnenraumgrenzfläche und erster Dichtfläche erstrecken.

Dies reduziert die Gefahr, dass der Belüftungskanal bei einer Verformung des Dichtelements in unerwünschter Weise abgedrückt wird oder verschlossen wird.

In einer optionalen Ausgestaltung kann sich das Dichtelement ringförmig in einer Ebene erstrecken und sich der Belüftungskanal in etwa senkrecht oder senkrecht zu dieser Ebene erstrecken.

Hierdurch lässt sich der Belüftungskanal im Dichtelement durch seine klar definierte Lage vergleichsweise einfach fertigen und die Gefahr eines zuvor genannten unerwünschten Abschnürens des Belüftungskanals beim Verformen des Dichtelements weiter reduzieren.

In einer weiteren, besonders vorteilhaften Ausführungsform kann das Dichtelement ringförmig um eine zentrale Achse verlaufen und sich der Belüftungskanal in etwa parallel oder parallel zur zentralen Achse erstrecken.

Hierdurch wird die Fertigbarkeit des Dichtelements weiter vereinfacht, bei Beibehaltung der zuvor genannten Vorteile.

In einer besonders vorteilhaften erfindungsgemäßen Ausgestaltung, kann die erste Dichtfläche auf ihrem direkten Weg zwischen ihrer Mündung des Belüftungskanals hin zu einer beim Abdichten mit dem Gefäßaußenraum in Fluidverbindung stehenden Außenkante des Dichtelements eine geringere Gasabdichteigenschaft aufweisen als die zweite Dichtfläche, insbesondere eine gasdurchlässige Oberflächenmikrostruktur im Vergleich zur zweiten Dichtfläche aufweist, besonders eine rauere Oberflächenbeschaffenheit aufweisen als die zweite Dichtfläche.

Eine solche Ausgestaltung des besagten Weges auf der ersten Dichtfläche fördert einen schnelleren Druckausgleich bei einer Verformung des Dichtelements. Weiterhin kann bei einer derartigen optionalen Ausgestaltung auch ein Gasaustausch über die erste Dichtfläche und den Belüftungskanal im flüssigkeitsdichten Zustand des Gefäßstopfens stattfinden, während ein unerwünschter Flüssigkeitsaustausch jedoch weiterhin unterbunden bleibt.

Durch ein optionales Versehen des besagten Weges am ersten Dichtelement mit einer gasdurchlässigen Oberflächenmikrostruktur kann beispielweise noch vor einem unterdruckbedingten Verformen des Dichtelements ein früher Gasaustausch, sprich Druckausgleich, zwischen Gefäßinnenraum und Gefäßaußenraum begonnen oder gefördert werden, während weiterhin eine Flüssigkeitsdichtheit gewährleistet bleibt.

Eine besonders vorteilhafte Umsetzung einer solchen Oberflächenmikrostruktur kann beispielsweise durch eine rauere Oberflächenbeschaffenheit als bei der zweiten Dichtfläche erzielt werden.

In einer weiteren Variante der Erfindung kann das Dichtelement zumindest teilweise aus elastischem Polymer, insbesondere zumindest teilweise aus Silikon, gefertigt sein und die erste Dichtfläche auf besagtem Weg eine durch eine erodierte Matrizenform geformte Oberflächenrauigkeit aufweisen.

Ein elastisches Polymermaterial erlaubt eine zuverlässige Fertigung des Dichtelement mit dem Belüftungskanal, dies gilt insbesondere für Silikon. Es hat sich gezeigt, dass ein erfindungsgemäßes Ausgestalten der Oberflächenrauigkeit an der ersten Dichtfläche über eine erodierte Matrizenform eine besonders zuverlässige und effiziente Fertigung dieser Oberflächeneigenschaft ermöglicht, welche in der Praxis zuverlässig funktioniert und hierbei zuverlässig flüssigkeitsdicht sein kann.

Weiterhin kann in einer möglichen Ausführungsform das Dichtelement ringförmig ausgebildet sein und sich mit der zweiten Dichtfläche hin zur Gefäßinnenraumgrenzfläche verjüngen.

Eine solche Geometrie fördert eine schnelle Belüftungswegfreigabe über die erste Dichtfläche bei einer unterdruckbedingten Verformung des Dichtelements hin zur Gefäßinnenraumgrenzfläche.

In einer besonders vorteilhafte Ausführung der Erfindung, können die erste Dichtfläche, die zweite Dichtfläche und die Gefäßinnenraumgrenzfläche im Querschnittsprofil drei aneinandergrenzende Raumseiten des Dichtelements bilden, wobei die zweite Dichtfläche im Querschnittsprofil winkelig, insbesondere in einem spitzen Winkel, oder kreisbogenförmig zur ersten Dichtfläche verläuft; und/oder die zweite Dichtfläche winkelig, insbesondere in einem stumpfen Winkel, oder kreisbogenförmig zur Gefäßinnenraumgrenzfläche verläuft.

Es hat sich gezeigt, dass Dichtelementgeometrien, bei welchen die zweite Dichtfläche im Querschnittsprofil winkelig, insbesondere in einem spitzen Winkel, oder kreisbogenförmig zur ersten Dichtfläche verläuft, besonders zuverlässig den gewünschten Druckausgleich bei Verformung bewirken und gleichzeitig eine schnelle Dichtigkeit an der zweiten Dichtfläche fördern.

Selbiges gilt für eine mögliche alternative oder zusätzliche Ausführungsform, bei welcher die zweite Dichtfläche winkelig, insbesondere in einem stumpfen Winkel, oder kreisbogenförmig zur Gefäßinnenraumgrenzfläche verläuft

In einer optionalen Weiterbildung der Erfindung können die erste Dichtfläche und die Gefäßinnenraumgrenzfläche in etwa parallel oder parallel zueinander liegen.

Eine etwa parallele Lage der beiden Flächen zueinander fördert eine gewünschte Verformung des Dichtelements in Richtung der Gefäßinnenraumgrenzfläche in der Art, dass das ein Belüftungsweg über die erste Dichtfläche freigegeben wird. Dies gilt insbesondere für eine optionale parallele Lage der beiden Flächen zueinander.

In einer weiteren möglichen Ausführungsform kann das Dichtelement ringförmig ausgebildet sein und auf seiner im Querschnittsprofil der zweiten Dichtfläche gegenüberliegenden Raumseite ein Profil zur formschlüssigen Befestigung an einer entsprechenden Aufnahme eines Gefäßstopfens aufweist, insbesondere ein stufenförmiges Querschnittsprofil mit einem Abschnitt größerer radialer lichter Weite auf der dem Gefäßinnenraum zugewandten Seite und einem Abschnitt geringerer radialer lichter Weite in auf der dem Gefäßinnenraum abgewandten Seite.

Ein Profil an der der zweiten Dichtfläche gegenüberliegenden Raumseite zur formschlüssigen Befestigung an einer entsprechenden Aufnahme eines Gefäßstopfens fördert zusätzlich eine gewünschte Verformung des Dichtelements bei Unterdruck auf der Gefäßinnenseite, da es die zweite Dichtfläche stärker in Richtung der Gefäßinnenraumgrenzfläche verformt als die gegenüberliegende Seite, welche mit ihrem Profil beispielsweise axial ortsfest an einem Gefäßstopfen befestigt werden kann.

Bei einer optionalen Ausgestaltung als stufenförmiges Querschnittsprofil mit einem Abschnitt größerer lichter Weite in radialer Richtung auf der dem Gefäßinnenraum zugewandten Seite und einen Abschnitt geringerer lichter Weite in radialer Richtung auf der dem Gefäßinnenraum abgewandten Seite, treten die zuvor beschriebenen, gewünschten Effekte im besonderen Maße auf.

Weitere mögliche Ausführungsformen der Erfindung beziehen sich auf einen Gefäßstopfen, insbesondere auf einen schraubbaren Gefäßstopfen, zum flüssigkeitsdichten Verschließen eines Gefäßes zum Aufbewahren von Flüssigkeiten, dadurch gekennzeichnet, dass der Gefäßstopfen ein elastisches Dichtelement gemäß einer der hier zuvor beschriebenen Ausführungen aufweist.

Insbesondere bei Gefäßstopfen zum flüssigkeitsdichten Verschließen eines Gefäßes zum Aufbewahren von Flüssigkeiten kann das erfindungsgemäße Dichtelement vorteilhaft eingesetzt werden. Dies gilt insbesondere bei schraubbaren Gefäßstopfen, bei welchen häufig unerwünschte, unterdruckbedingt hohe Öffnungskräfte notwendig werden.

In einer möglichen erfindungsgemäßen Ausführungsform des Gefäßstopfens ist das Dichtelement am Gefäßstopfen angebracht und der Belüftungskanal durch Anlage der ersten Dichtfläche an den Gefäßstopfen verschlossen, wobei eine unterdruckbedingte elastische Verformung des Dichtelements in Richtung der Gefäßinnenraumgrenzfläche einen Belüftungsweg von einer beim Abdichten mit dem Gefäßaußenraum in Fluidverbindung stehenden Außenkante des Dichtelements entlang der ersten Dichtfläche hin zum Belüftungskanal freigibt.

Eine derartige Anordnung reduziert zuverlässig die bei Unterdruck notwendige Öffnungskraft für den Gefäßstopfen.

Weitere erfindungsgemäße Ausführungsformen betreffen einen Behälter zum Aufbewahren von Flüssigkeiten, insbesondere zum Aufbewahren von Heißgetränken, aufweisend ein Gefäß mit Gefäßinnenraum und einen zugehörigen Gefäßstopfen gemäß einer der hier zuvor beschriebenen Ausführungen.

Bei derartigen Behältern erhöht ein Gefäßstopfen gemäß der vorliegenden Erfindung im besonderen Maße den Bedienkomfort. Dies gilt insbesondere für Behälter zum Aufbewahrung von Heißgetränken, bei denen der unerwünschte Unterdruckeffekt im Gefäßinnenraum besonders häufig auftritt, und dies gilt nochmals im besonderen Maße für derartige thermisch isolierte Behälter.

In weiteren optionalen Ausführungsformen kann das erfindungsgemäße Dichtelement in den hier zuvor beschriebenen Ausführungsformen mehrere erfindungsgemäße Belüftungskanäle aufweisen. Hierdurch wird die Zuverlässigkeit eines Druckausgleichs durch zumindest einen der Belüftungskanäle sowie die Geschwindigkeit des Druckausgleichsprozesses erhöht.

In weiteren möglichen Ausführungsformen der hier zuvor beschriebenen Ausführungsformen, kann das besagte Dichtelement bei einer ringförmigen Ausgestaltung des Dichtelements mehrere in umfänglicher Richtung zueinander beabstandete Belüftungskanäle aufweisen, beispielsweise zwölf. Hierdurch wird die Zuverlässigkeit eines Druckausgleichs über zumindest einen der Belüftungskanäle sowie die Geschwindigkeit des Druckausgleichsprozesses nochmals verbessert, insbesondere durch die gleichmäßig räumliche Verteilung der Belüftungskanäle.

Vorteilhafte Ausführungsformen der Erfindung, welche zuvor genannte erfindungsgemäße Ausführungen in vorteilhafter Weise kombinieren, werden nun unter Bezugnahme auf die Figuren näher erläutert.

Hierbei zeigen
- Fig. 1: eine erste Perspektive von der dem Gefäßinnenraum abgewandten Seite auf ein erfindungsgemäßes Dichtelement,
- Fig. 2: eine zweite Perspektive von der dem Gefäßinnenraum zugewandten Seite auf das Dichtelement aus Fig. 1,
- Fig. 3: das Dichtelement aus Fig. 1 im Querschnitt sowie ein zugehöriges vergrößertes Querschnittsprofil,
- Fig. 4: eine Querschnittsansicht durch einen Gefäßstopfen gemäß der vorliegenden Erfindung, versehen mit dem Dichtelement aus Fig. 1,
- Fig. 5: eine Querschnittsansicht durch einen Behälter gemäß der vorliegenden Erfindung mit dem Gefäßstopfen aus Fig. 4 sowie eine zugehörige Teilvergrößerung.

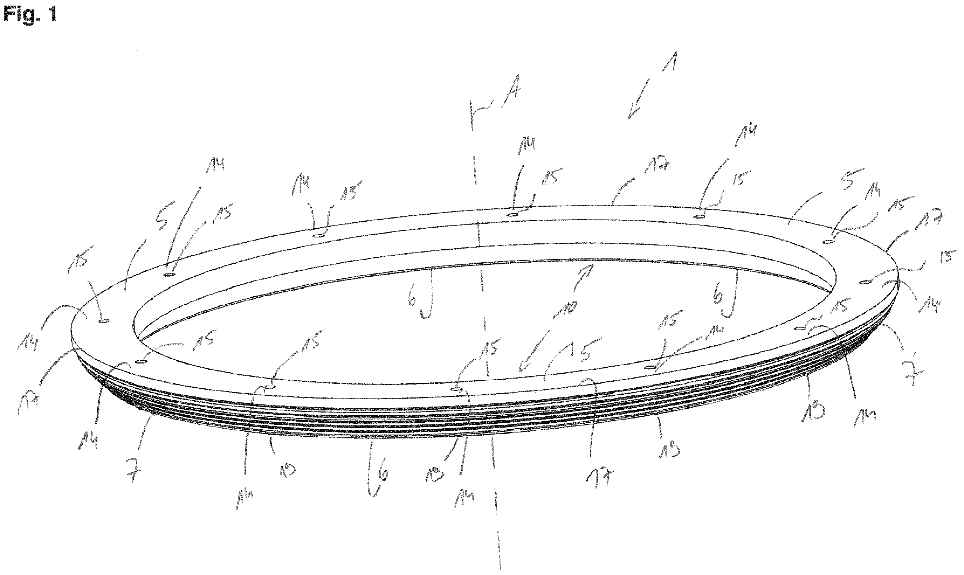

Fig. 1 zeigt ein elastisches Dichtelement 1 gemäß einer Ausführungsform der Erfindung. Das Dichtelement 1 ist dafür vorgesehen, einen Gefäßstopfen 2, insbesondere einen schraubbaren Gefäßstopfen 2, gegenüber einem Gefäßinnenraum 3 eines Gefäßes 4, insbesondere eines thermischen Isolierbehälters für heiße Flüssigkeiten, wie Heißgetränke, flüssigkeitsdicht abzudichten. Der Stopfen ist in dieser Ausführungsform aus einem Polymer, beispielsweise aus Polypropylen gefertigt.

Das Dichtelement 1 weist auf seiner beim Abdichten dem Gefäßinnenraum 3 abgewandten Seite eine erste Dichtfläche 5 zur Anlage an den Gefäßstopfen 2 auf.

Auf seiner beim Abdichten dem Gefäßinnenraum 3 zugewandten Seite weist das Dichtelement 1 eine Gefäßinnenraumgrenzfläche 6 auf, welche beim Abdichten mit dem Gefäßinnenraum 3 in Fluidverbindung steht, so dass die Gefäßinnenraumgrenzfläche 6 dem im Gefäßinnenraum 3 herrschenden Druck ausgesetzt ist.

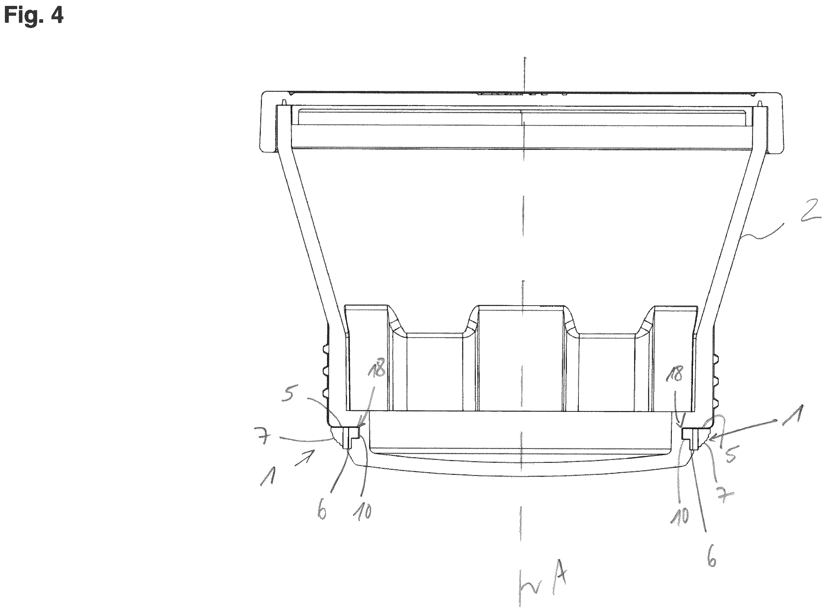

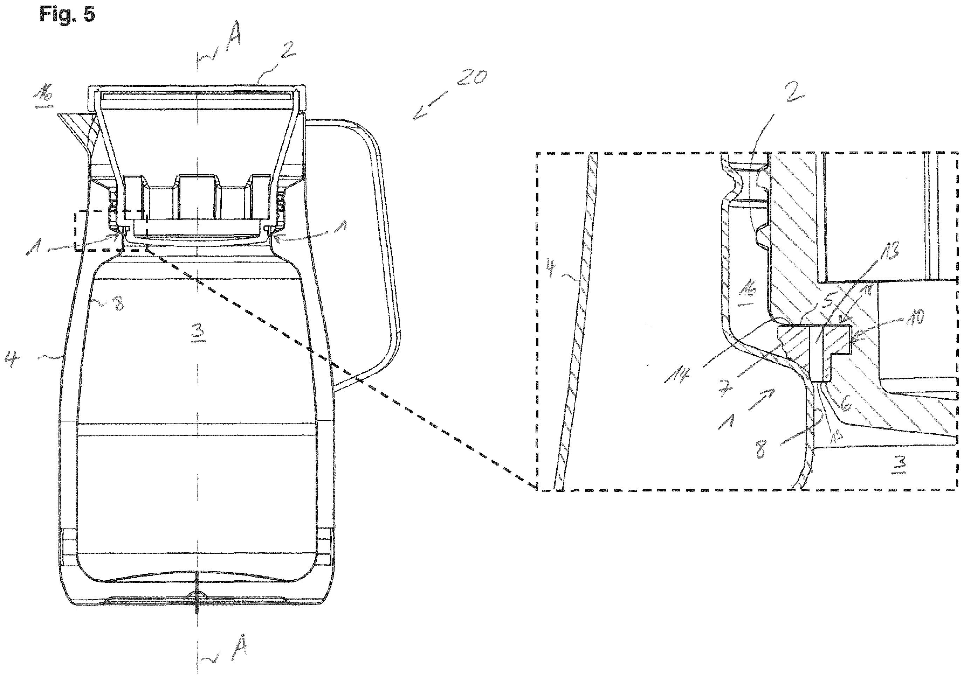

In dieser Ausführungsform ist das Dichtelement 1 ringförmig, beispielsweise hier in Form einer kreisrunden Profildichtung um eine zentrale Achse A ausgebildet und erstreckt sich dabei in einer Ebene. In anderen, nicht dargestellten Ausführungsformen kann das Dichtelement 1 beispielsweise als ein ringförmiges Oval ausgebildet sein oder auch nur als eine geradlinige Streifendichtung oder als ein Kreisbogen. In der vorliegenden Ausführungsform ist die Achse A eine Rotationssymmetrieachse zum Querschnittsprofil des Dichtelements 1. In den in Fig. 4 und Fig. 5 gezeigten Anordnungen fallen die Achse A und die zentralen Hauptachsen des Gefäßstopfens 2, des Gefäßes 4 sowie des gesamten Behälters 20 zusammen.

Die erste Dichtfläche 5 und die Gefäßinnenraumgrenzfläche 3 liegen in dieser Ausführungsform parallel zu einander. In anderen, nicht dargestellten Ausführungsformen können die beiden Dichtflächen 5, 3 nicht genau parallel zueinander, sprich auch nur in etwa parallel zueinander liegen. In wieder anderen, nicht dargestellten Ausführungsformen, können die beiden Dichtflächen 5, 3 auch winklig zueinander liegen.

Von der ersten Dichtfläche 5 hin zur Gefäßinnenraumgrenzfläche 3 erstreckt sich auf der radial äußeren Seite des Dichtelements eine zweite Dichtfläche 7 zur Anlage an einer Wandung 8 des Gefäßinnenraumes 3.

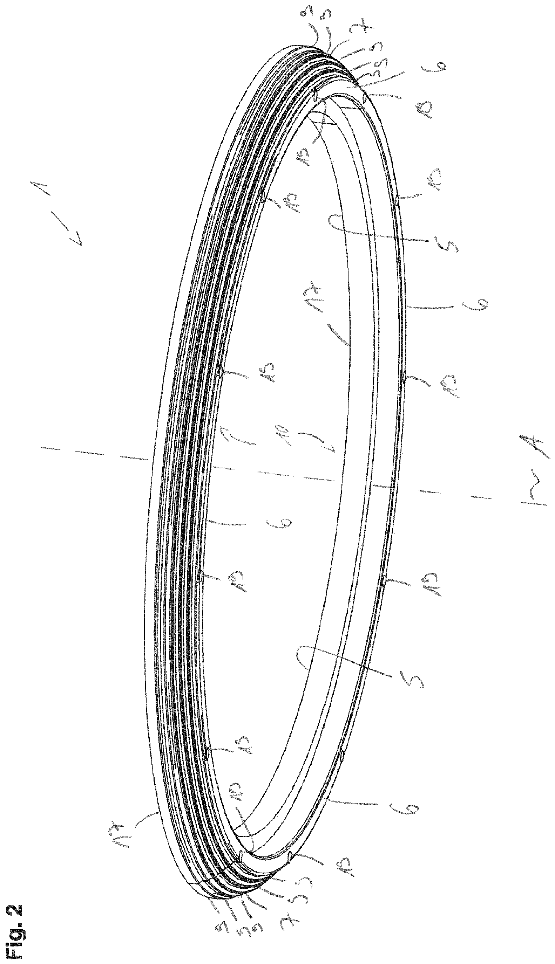

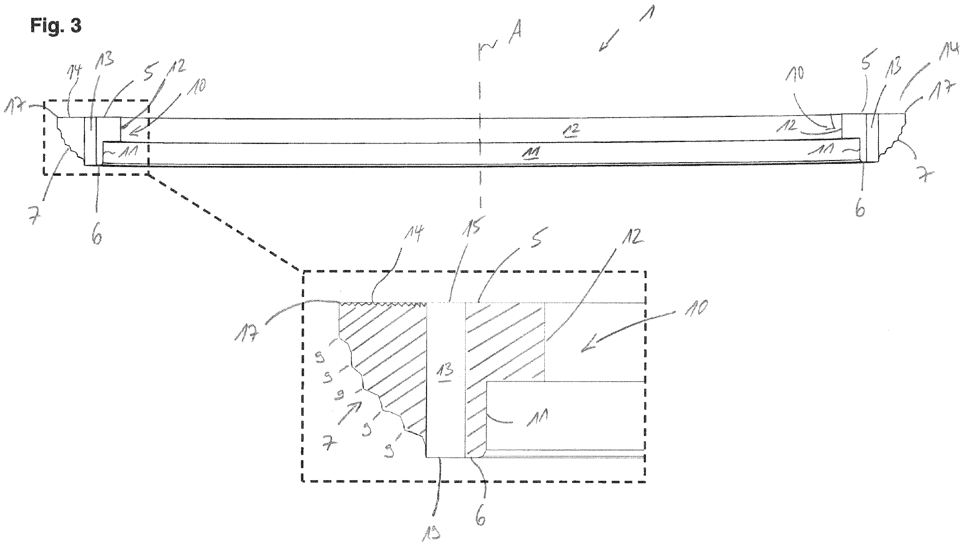

Die zweite Dichtfläche 7 weist hier in ihrem Querschnittsprofil mehrere Vorsprünge, hier in Form von mehreren parallel umfänglich laufenden Dichtrippen 9, auf, was in Fig. 2 und insbesondere in der Querschnittsansicht der Fig. 3 (geschnitten radial durch das Dichtelement) sowie in der Teilvergrößerung des Querschnittsprofils in dieser Figur gut zu sehen ist.

Das Querschnittsprofil der zweiten Dichtfläche 7 würde man hier als kreisbogenförmig hin zur ersten Dichtfläche 5 sowie hin zur Gefäßinnenraumgrenzfläche 6 beschreiben. Eine winkelige Lage zu diesen beiden Flächen 5, 6, sprich ein spitzer Winkel hin zur ersten Dichtfläche 5 und ein stumpfer Winkel hin zur Gefäßinnenraumgrenzfläche 6 sind ebenfalls denkbar.

Bei sämtlichen zuvor genannten Möglichkeiten verjüngt sich das Dichtelement 1 mit der zweiten Dichtfläche 7 hin zur Gefäßinnenraumgrenzfläche 6, also reduziert hier seinen Durchmesser entlang der Achse A hin zur Gefäßinnenraumseite.

Die erste Dichtfläche 5, die zweite Dichtfläche 7 und die Gefäßinnenraumgrenzfläche 6 bilden hier die drei aneinandergrenzenden äußeren Raumseiten des Querschnittsprofils des Dichtelements 1.

Die im Querschnitt verbleibende vierte Raumseite 10, welche der zweiten Dichtfläche 7 im Querschnittsprofil gegenüberliegt, weist hier einen stufenförmigen Querschnitt auf, mit einem Abschnitt größerer lichter Weite 11 in radialer Richtung auf der dem Gefäßinnenraum zugewandten Seite und mit einem Abschnitt 12 geringerer lichter Weite in radialer Richtung auf der dem Gefäßinnenraum 3 abgewandten Seite.

Wie den Figuren 1 bis 3 weiterhin zu entnehmen ist, weist das Dichtelement 1 in dieser Ausführungsform zwölf Belüftungskanäle 13 auf, welche in gleichen umfänglichen Abständen zueinander entlang des Umfangs des Dichtelements 1 verteilt angeordnet sind und sich jeweils von der Gefäßinnenraumgrenzfläche 6 durch das Dichtelement 1 hin zur ersten Dichtfläche 5 erstrecken.

In dieser Ausführungsform erstrecken sich die Belüftungskanäle 13 dabei parallel zueinander und parallel zur Achse A, also hier auch senkrecht zur Erstreckungsebene des Dichtelements 1, auf kürzestem Wege zwischen erster Dichtfläche 5 und der Gefäßinnenraumgrenzfläche 6.

Die zweite Dichtfläche 7 ist entsprechend radial außerhalb zu den Belüftungskanälen 13 positioniert.

Wie in der Teilvergrößerung der Fig. 3 etwas übertrieben skizziert, weist die erste Dichtfläche in dieser Ausführungsform auf ihrem direkten Weg 14 zwischen ihrer Mündung 15 des Belüftungskanals 13 hin zu einer beim Abdichten mit dem Gefäßaußenraum 16 in Fluidverbindung stehenden radialen Außenkante 17 des Dichtelements 1 eine geringere Gasabdichteigenschaft auf als die zweite Dichtfläche 7, hier eine gasdurchlässige Oberflächenmikrostruktur in Form einer raueren Oberflächenbeschaffenheit als die zweite Dichtfläche 7, auf.

In möglichen Ausführungsformen weist die erste Dichtfläche 5 gemäß der vorliegenden Erfindung zumindest in dem Bereich des besagten Weges 14 einen Mittenrauwert im Bereich von Ra 3,0 µm bis Ra 9,0 µm auf, insbesondere einen Mittenrauwert im Bereich von Ra 4,0 µm bis Ra 6,5 µm, besonders einen Mittenrauwert von ungefähr Ra 4,5 µm, auf.

Das Dichtelement 1 in dieser Ausführungsform ist weiterhin aus Silikon gefertigt und die erste Dichtfläche 5 weist auf besagten Wegen 14 zwischen Belüftungskanal-Mündungen 15 und der radial äußeren Kante 17 eine durch eine erodierte Matrizenform geformte Oberflächenrauigkeit mit einem Mittenrauwert im Bereich von ungefähr Ra 4,5 µm auf.

Fig. 4 zeigt eine Ausführungsform eines hier schraubbaren Gefäßstopfens 2 gemäß der vorliegenden Erfindung zum flüssigkeitsdichten Verschließen eines Gefäßes 4 zum Aufbewahren von Flüssigkeiten.

Der Gefäßstopfen 2 weist hierbei, an seiner Gefäßinnenraumseite in einer umfänglich verlaufenden Ringnut 18 sitzend, das Dichtelement 1 auf. Die Ringnut 18 weist ein zum stufenförmigen inneren Querschnittsprofil 10 des Dichtelements 1 komplementäres Querschnittsprofil auf, so dass die Gefäßinnenraumgrenzfläche 6 mit ihren zugehörigen Belüftungskanalmündungen 19 zumindest teilweise freiliegt sowie die zweite Dichtfläche 7 freiliegt.

Wie sich Fig. 4 sowie auch der Teilvergrößerung der Fig. 5 entnehmen lässt, ist der Belüftungskanal 13 durch Anlage der ersten Dichtfläche 5 in der Ringnut 18 an den Gefäßstopfen 2 flüssigkeitsdicht verschlossen, wobei jedoch trotzdem eine Belüftung über die rauere Oberfläche am Weg 14 der ersten Dichtfläche 5 und/oder eine Belüftung mittels Freigabe des Weges 14 durch eine unterdruckbedingte elastische Verformung des Dichtelements 1 in Richtung der Gefäßinnenraumgrenzfläche 6 ermöglicht ist.

In einer möglichen Ausführungsform kann die den Unterdruck im Gefäßinnenraum 3 reduzierende Belüftung größtenteils oder vollständig über die Oberflächeneigenschaften der ersten Dichtfläche 5 im Bereich des Weges 14 realisiert werden. In anderen Möglichen Ausführungsformen wird besagte Belüftung größtenteils oder vollständig durch besagte Freigabe des Wege 14 aufgrund einer unterdruckbedingten elastischen Verformung des Dichtelements 1 freigegeben. In der hier vorliegenden Ausführungsform sind beide Merkmale vorhanden, um den Bedienkomfort für den Benutzer bestmöglich zu verbessern.

Fig. 5 zeigt eine Querschnittsansicht eines thermisch isolierten Behälters 20, hier beispielsweise durch evakuierte Doppelwandung, gemäß einer Ausführungsform der Erfindung. Der Behälter 20 ist zum Aufbewahren von Flüssigkeiten, insbesondere zum Aufbewahren von Heißgetränken, vorgesehen und weist ein Gefäß 4 mit besagtem Gefäßinnenraum 3 sowie einen zugehörigen Gefäßstopfen 2 gemäß der vorliegenden Erfindung auf.

Der Teilvergrößerung in der Fig. 5 lässt sich die Lage des Dichtelements 1 zum Gefäßstopfen 2 und der Gefäßinnenraumwand 8 gut entnehmen.

Die ersten Dichtfläche 5 sowie die zweite Dichtfläche 7 liegen hier im verschlossenen Zustand, also in einem Zustand, in welchem der Gefäßstopfen 2 bis zu einer Endposition in das Gefäß 4 eingeschraubt ist und das Dichtelement 1 den Gefäßstopfen 2 gegenüber dem Gefäßinnenraum 3 flüssigkeitsdicht abdichtet, flüssigkeitsdicht an dem Gefäßstopfen 2 bzw. flüssigkeitsdicht an der hier flaschenhalsförmig verjüngten Wandung 8 des Gefäßinnenraums 3 an. Somit kann beim Abdichten durch das Dichtelements 1 keine Flüssigkeit aus dem Gefäßinnenraum 3 des Weges 14 am Dichtelement 1 austreten, wobei in dieser Ausführungsform bereits ein Druckaustausch zwischen Gefäßinnenraum 3 und Gefäßaußenraum 16 am Dichtelement 1 über die Oberflächenbeschaffenheit der ersten Dichtfläche 5 zusammen mit den Belüftungskanälen 13 ermöglicht ist, spätestens aber durch ein unterdruckbedingtes Verformen des Dichtelements 1 in Richtung der Gefäßinnenraumgrenzfläche 6 ermöglicht ist, beispielsweise beim Öffnen des Stopfens 2 in Fällen, bei denen ein schneller Druckausgleich aufgrund eines hohen Unterdrucks im Gefäßinnenraum 3 rein über die Oberflächenbeschaffenheit des Weges 14 der ersten Dichtfläche 5 nicht stattfinden kann oder nicht ausreicht.

Ein Beispiel für ein erfindungsgemäßes Zusammenwirken eines erfindungsgemäßen Dichtelements 1 mit einem entsprechenden Gefäßstopfen 2 und einem Gefäß 4 wird nachfolgend kurz erläutert.

Das Dichtelement 1 wird in die zugehörige Ringnut 18 des Stopfens 2 eingebracht, so dass das innenliegende Stufenprofil 10 in Achsrichtung A verschiebungsfest am Stopfen 2 sitzt, die erste Dichtfläche 5 flüssigkeitsdicht am Gefäßstopfen 2 anliegt und die zweite Dichtfläche 7 sowie die Gefäßinnenraumgrenzfläche 6 mit den zugehörigen Mündungen 19 der Belüftungskanäle 13 freiliegen.

Anschließend wird beispielsweise ein heißes Getränk in den thermisch isolierten Gefäßinnenraum 3 eingebracht und der Gefäßstopfen 2 in die zugehörige Öffnung des Gefäßes 4 eingeschraubt, bis die zweite Dichtfläche 7 mit ihren Rippen 9 flüssigkeitsdicht mit der zugehörigen Wandung 8 des Gefäßinnenraums 3 in Anlage kommt und das Gefäß 4 flüssigkeitsdicht verschlossen ist.

Mit dem Abkühlen der Flüssigkeit im Gefäßinnenraum 3 bildet sich ein Unterdruck im Gefäßinnenraum, welcher sich zur selben Zeit über einen leichten Luftstrom entlang der luftdurchlässigen Oberflächenmikrostruktur des Weges 14 an der ersten Dichtfläche 5 beginnt abzubauen. Sollte zu einem Zeitpunkt, an dem der Benutzer den Gefäßstopfen 2 vom Gefäßinnenraum 3 wegschraubt, der Druckausgleich über die Oberflächenmikrostruktur noch nicht vollständig erfolgt sein, so zieht es bei einer Öffnungsbewegung des Stopfens 2 das Dichtelement 1 in den Spalt zwischen Gefäßinnenraumwandung 8 und Stopfen 2 und hierbei den Abschnitt mit der zweiten Dichtfläche 7 stärker als den Abschnitt mit dem stufenförmigen Profil 10 in den Spalt, so dass bei dieser Öffnungsbewegung die erste Dichtfläche 5 zumindest im Bereich des Weges 14 vom Stopfen 2 abgehoben wird und ein schneller Druckausgleich entlang der ersten Dichtfläche 5 und durch die Belüftungskanäle 13 vom Gefäßaußenraum 16 in den Gefäßinnenraum 3 erfolgt.

Der Benutzer erfährt hierbei eine sehr komfortable Öffnungskrafterleichterung, ohne die Gefahr, dass der flüssige Inhalt des Gefäßes 4 über die Dichtung 1, beispielsweise bei Schräg- oder Überkopflagen des Behälters 20, austreten könnte.

## Patentansprüche

1. Elastisches Dichtelement (1) zum flüssigkeitsdichten Abdichten eines Gefäßstopfens (2) gegenüber einem Gefäßinnenraum (3), das Dichtelement (1) aufweisend
eine Gefäßinnenraumgrenzfläche (6) befindlich an einer beim Abdichten dem Gefäßinnenraum (3) zugewandten Seite des Dichtelements (1), wobei die Gefäßinnenraumgrenzfläche (6) beim Abdichten mit dem Gefäßinnenraum (3) in Fluidverbindung steht,
eine erste Dichtfläche (5) zur Anlage am Gefäßstopfen (2), die erste Dichtfläche (5) befindlich an einer dem Gefäßinnenraum (3) abgewandten Seite des Dichtelements (1), eine zweite Dichtfläche (7) zur Anlage an einer Wandung (9) des Gefäßinnenraums (3), **dadurch gekennzeichnet, dass**
das Dichtelement (1) einen Belüftungskanal (13) aufweist, welcher sich von der Gefäßinnenraumgrenzfläche (6) durch das Dichtelement (1) hin zur ersten Dichtfläche (5) erstreckt.

2. Dichtelement (1) nach Anspruch 1, **dadurch gekennzeichnet, dass**
die zweite Dichtfläche (7) ein Querschnittsprofil mit mehreren Vorsprüngen, insbesondere ein Querschnittsprofil mit mehreren Dichtrippen (9), aufweist.

3. Dichtelement (1) nach einem der vorherigen Ansprüche, **dadurch gekennzeichnet, dass**
das Dichtelement (1) ringförmig ausgebildet ist und die zweite Dichtfläche (7) radial außerhalb zum Belüftungskanal (13) positioniert ist.

4. Dichtelement (1) nach einem der vorherigen Ansprüche, **dadurch gekennzeichnet, dass**
sich der Belüftungskanal (13) auf kürzestem Wege zwischen Gefäßinnenraumgrenzfläche (6) und erster Dichtfläche (5) erstreckt, insbesondere das Dichtelement (1) sich ringförmig in einer Ebene erstreckt und sich der Belüftungskanal (13) in etwa senkrecht oder senkrecht zu dieser Ebene erstreckt, besonders das Dichtelement (1) ringförmig um eine zentrale Achse (A) verläuft und sich der Belüftungskanal (13) in etwa parallel oder parallel zur zentralen Achse (4) erstreckt.

5. Dichtelement (1) nach einem der vorherigen Ansprüche, **dadurch gekennzeichnet, dass**
die erste Dichtfläche (5) auf ihrem direkten Weg (14) zwischen ihrer Mündung (15) des Belüftungskanals (13) hin zu einer beim Abdichten mit dem Gefäßaußenraum (16) in Fluidverbindung stehenden Außenkante (17) des Dichtelements (1) eine geringere Gasabdichteigenschaft aufweist als die zweite Dichtfläche (7), insbesondere eine gasdurchlässige Oberflächenmikrostruktur im Vergleich zur zweiten Dichtfläche (7) aufweist, besonders eine rauere Oberflächenbeschaffenheit aufweist als die zweite Dichtfläche (7).

6. Dichtelement (1) nach Anspruch 5, **dadurch gekennzeichnet, dass** das Dichtelement (1) zumindest teilweise aus elastischem Polymer, insbesondere zumindest teilweise aus Silikon, gefertigt ist und die erste Dichtfläche (5) auf besagtem Weg (14) eine durch eine erodierte Matrizenform geformte Oberflächenrauigkeit aufweist.

7. Dichtelement (1) nach einem der vorherigen Ansprüche, **dadurch gekennzeichnet, dass** das Dichtelement (1) ringförmig ausgebildet ist und sich mit der zweiten Dichtfläche (2) hin zur Gefäßinnenraumgrenzfläche (6) verjüngt.

8. Dichtelement (1) nach einem der vorherigen Ansprüche, **dadurch gekennzeichnet, dass** die erste Dichtfläche (5), die zweite Dichtfläche (7) und die Gefäßinnenraumgrenzfläche (6) im Querschnittsprofil drei aneinandergrenzende Raumseiten des Dichtelements (1) bilden, wobei die zweite Dichtfläche (7) im Querschnittsprofil winkelig, insbesondere in einem spitzen Winkel, oder kreisbogenförmig zur ersten Dichtfläche (5) verläuft; und/oder die zweite Dichtfläche (7) winkelig, insbesondere in einem stumpfen Winkel, oder kreisbogenförmig zur Gefäßinnenraumgrenzfläche (6) verläuft.

9. Dichtelement (1) nach einem der vorherigen Ansprüche, **dadurch gekennzeichnet, dass**
die erste Dichtfläche (5) und die Gefäßinnenraumgrenzfläche (6) in etwa parallel oder parallel zueinander liegen.

10. Dichtelement (1) nach einem der vorherigen Ansprüche, **dadurch gekennzeichnet, dass** das Dichtelement (1) ringförmig ausgebildet ist und auf seiner im Querschnittsprofil der zweiten Dichtfläche (7) gegenüberliegenden Raumseite ein Profil zur formschlüssigen Befestigung an einer entsprechenden Aufnahme eines Gefäßstopfens (2) aufweist, insbesondere ein stufenförmiges Querschnittsprofil (10) mit einem Abschnitt größerer radialer lichter Weite auf der dem Gefäßinnenraum (3) zugewandten Seite und einem Abschnitt (12) geringerer radialer lichter Weite auf der dem Gefäßinnenraum (3) abgewandten Seite.

11. Gefäßstopfen (2), insbesondere schraubbarer Gefäßstopfen, zum flüssigkeitsdichten Verschließen eines Gefäßes (4) zum Aufbewahren von Flüssigkeiten, **dadurch gekennzeichnet, dass** der Gefäßstopfen (2) ein elastisches Dichtelement (1) gemäß einem der vorherigen Ansprüche aufweist.

12. Gefäßstopfen (2) nach Anspruch 11, **dadurch gekennzeichnet, dass** das Dichtelement (1) am Gefäßstopfen (2) angebracht ist und der Belüftungskanal (13) durch Anlage der ersten Dichtfläche (5) an den Gefäßstopfen (2) verschlossen ist, wobei eine unterdruckbedingte elastische Verformung des Dichtelements (1) in Richtung der Gefäßinnenraumgrenzfläche (6) einen Belüftungsweg (14) von einer beim Abdichten mit dem Gefäßaußenraum (16) in Fluidverbindung stehenden Außenkante (17) des Dichtelements (1) entlang der ersten Dichtfläche (5) hin zum Belüftungskanal (13) freigibt.

13. Behälter (20) zum Aufbewahren von Flüssigkeiten, insbesondere zum Aufbewahren von Heißgetränken, aufweisend ein Gefäß (4) mit Gefäßinnenraum (3) und einen zugehörigen Gefäßstopfen (2) gemäß einem der Ansprüche 11 und 12.
